(19) **Europäisches Patentamt**

**European Patent Office**

**Office européen des brevets**

(11) **EP 1 715 474 A1**

(12) **EUROPEAN PATENT APPLICATION**
published in accordance with Art. 158(3) EPC

(43) Date of publication:
**25.10.2006 Bulletin 2006/43**

(51) Int Cl.:
***G10K 11/34*** *(2006.01)*

(21) Application number: **05708106.9**

(22) Date of filing: **20.01.2005**

(86) International application number:
**PCT/ES2005/070008**

(87) International publication number:
**WO 2005/073957 (11.08.2005 Gazette 2005/32)**

(84) Designated Contracting States:
**AT BE BG CH CY CZ DE DK EE ES FI FR GB GR HU IE IS IT LI LT LU MC NL PL PT RO SE SI SK TR**

(30) Priority: **30.01.2004 ES 200400203**

(71) Applicant: **CONSEJO SUPERIOR DE INVESTIGACIONES CIENTIFICAS (CSIC) 28006 Madrid (ES)**

(72) Inventors:
- **FRITSCH YUSTA, C.,**
  **Insto. de Automatica Ind.**
  **28500 Arganda del Rey (Madrid) (ES)**
- **PARRILLA ROMERO, M.,**
  **Insto. de Automát. Idustrial**
  **28500 Arganda del Rey (Madrid) (ES)**
- **MARTINEZ GRAULLERA, O.,**
  **Insto. de Auto. Industrial**
  **28500 Arganda del Rey (Madrid) (ES)**
- **GIACCHETTA, R. C.,**
  **Insto. de Automática Industrial**
  **28500 Arganda del Rey (Madrid) (ES)**

- **SANCHEZ MARTIN, T.,**
  **Insto. de Automát. Industrial**
  **28500 Arganda del Rey (Madrid) (ES)**
- **IBANEZ RODRIGUEZ, A.,**
  **Insto. de Autom. Industrial**
  **28500 Arganda del Rey (Madrid) (ES)**
- **GOMEZ ULLATE, L.,**
  **Insto. de Automática Industrial**
  **28500 Arganda del Rey (Madrid) (ES)**
- **JIMENEZ GONZALEZ, D.,**
  **Insto. de Autom. Industrial**
  **28500 Arganda del Rey (Madrid) (ES)**
- **LIEBANA GALLEGO, J. C.,**
  **Insto. de Autom. Idustrial**
  **28500 Arganda del Rey (Madrid) (ES)**
- **VILLANUEVA MARTINEZ, E.,**
  **Insto. Autom. Industrial**
  **28500 Argandal del Rey (Madrid) (ES)**

(74) Representative: **Ungria Lopez, Javier et al Avda. Ramon y Cajal, 78 28043 Madrid (ES)**

(54) **COHERENT COMPOSITION OF SIGNALS BY MEANS PROGRESSIVE FOCAL CORRECTION**

(57) The invention relates to a beam former which performs coherent composition of signals originating from a given propagation direction, which are received by an array of <I>N </I> receiving transducers. The inventive methodology and devices are suitable for use in the following fields: radar, sonar, acoustic, seismology, ultrasound imaging (echography and non-destructive testing) and others. According to the invention, the beam former employs arrays having elements which can be distributed randomly. In particular, the invention can be used for dynamic focusing with deflection of the beam in azimuth and elevation, using two-dimensional arrays.

EP 1 715 474 A1

**Description**

**TECHNICAL FIELD**

**Physical Technology**

Electronic system tor clinical echographies and non-destructive testing Other applications: radar, sonar, seismology.

**PRIOR ART**

In various fields of application, a set of $N$ transducers or array, receives signals from one or multiple sources located at a certain distance and orientation from the array. This is a common situation in radio astronomy, radar, sonar, seismology and, particularly in the field of array-based ultrasonic technology (clinical or industrial echographies, in this case as applied to Non-destructive testing), where $N$ is, typically, in the range of 32 to 256 or more.

In these situations, each of the $N$ elements of the array receives the signal generated by each source with a certain temporary delay in relation to the other elements. The function of a beam former is to obtain one sole signal from all the $N$ signals received in which the temporary delays for each possible distance at a given orientation are compensated, increasing the discrimination capacity of the system (greater resolution, signal/noise ratio and contrast). By repeating this process in a variety of directions by means of linear or angular scans, sufficient information is obtained to compose a 2D or 3D image from the source signals. In the specific case of ultrasounds, the $N$ signals received are echoes produced by the discontinuities in the media that have been sonified by an emitter that may be the same receptor array (or a subset of same) or other transducer (array or monoelement).

In the reception end, it is desirable to compensate the delays at all the points or foci along the propagation line in a given direction. This requires the continuous modification of the time delays to be able to adapt them for the incoming echoes produced at dynamically variable distances from each element. This *dynamic focusing* technique provides the greatest resolution, contrast and signal/noise ratio.

Since it is technically impossible to modify delays in a continuous fashion it is essential that they are discretized with an excellent temporal resolution for each array element and for each distance, typically in the order of 1/16 to 1/64 of the fundamental signal period.

This tact has spurred the search for dynamic focusing reception methods that are simple and efficient and that have been adapted to the available technology through time. In this manner, techniques based in CCD devices actuated by clocks that determine the delay time by their period have been described [Macowski, "Ultrasonic electronic lens with reduced delay range", US Patent N° 4058003, Nov, 1977], of in switchable delay lines [Maslak, , US Patent N° 4550607, "Phased array acoustic imaging system" Nov, 1985]. These methods introduce switching artifacts, are bulky and provide limited resolution, and are practically in disuse.

Another alternative, also analogic, is based in the use of mixers and phase shifters that effect the temporal delays in the frequency domain [Malask et al., "Dynamic focused linear phased array acoustic imaging system", US. Pat 4699009, Oct, 1987]. One the problems associated to this type of techniques is how difficult it is to adapt them to transducers operating at different frequencies.

On the other hand, the use of phase scramblers based in the CORDIC algorithm [R. Andraka, "A survey of CORDIC algorithms for FPGAs", Proc. 1998 ACM/SIGDA VI Int'l symposium of FPGAs, Monterrey, CA, pp. 191-200, Feb. 1998], and on their application to dynamic focusing can be found in [ O'Donnel et al., "Method and apparatus for digital phased array imaging", US Patent N° 4983970, Jan. 1991] and in [Engles et al. "Dynamic phase focus for coherent imaging beam formation", US Patent 511695, May 1992], in which there is significant hardware involved.

The availability of the VLSI technology allowed the formulation of new proposals based in delaying the signals once digitalized. Each element of the array is associated to an independent acquisition and processing channel (focusing). The N channels outputs are added to obtain the resulting signal (coherent summation). To operate in real time, each channel has two memory spaces: one for data, where the acquired samples are stored, and the other assigned to focusing to establish the delays to be applied.

In principle, delay resolution was limited to the signal sampling period itself, as established by the Nyquist criterion, between approximately 1/3 to 1/5 of the signal's period, using the variable length shift registers [Welles II et al., "Architecture for ultrasonic imaging", US Patent 4796236, Jan 1989]. The low temporal resolution produces delay quantification lobules that reduce the dynamic range, contrast and the signal/noise ratio of the image [D.K. Peterson, G. s. Kino, "Real-time Digital Image Reconstruction: A Description of Imaging Hardware and an Analysis of Quantization Errors", IEEE Trans. Sonics Ultrasonics, 31, pp. 337-351, Jul 1984].

The option of using a greater sampling frequency is not advisable due to the greater cost of the components, energetic consumption and the volume of data to store and process. To solve this problem several techniques have been proposed that can be grouped in two kinds:

1. Gross delay with a temporal resolution equivalent to the sampling period, and a fine delay achieved by interpolating the received signal between two consecutive samples with a typical resolution between 1/4 and 1/16 of the sampling period.

The following patents belong in this group: [Odell, "Digital beamforming and filtering circuit,", US Patent N° 5208877, Dec, 1993], [D. Lipschutz, "Time multiplexed digital ultrasound beamformer", US Patent 5469851, Nov 19951, [Beaudin et al., "Delay generator for phased array ultrasound beamformer" US Patent 5522391, Jun 1996], [Wright et al. "Method and apparatus for receive beamforming system", US Patent 6042547. Mar 2000] and [M.H. Bae, "Ultrasonic signal focusing method and apparatus for ultrasonic imaging systems", US Patent 6231611, May 2001]. This technique, with diverse variations to physically implement the gross and fine delays, including the phase rotation by CORDIC algorithms, invariably requires an interpolation stage and a selector of interpolated samples per channel, with the subsequent associated complexity and errors inherent to such systems.

2. Direct acquisition of signals in the instants that correspond to the arrival of the signal from each focus to each element. To do this, the sampling clock phase is controlled for each channel with an equivalent temporal resolution of 1/16 and 1/(64) of the fundamental period of each signal this method makes the interpolation stage unnecessary, eliminating the corresponding electronic and error sources. The samples can be acquired over a FIFO memory from which they can be extracted to do the coherent summation [Chang et al., "Bandwidth sampling technique for digital focusing in array imaging systems", US Patent 5581036, Dec 1996].

The greatest problem associated to this technique is to achieve the sufficient precision in the controlled phase sampling clock generators. In [O'Donnell et al., "Method and apparatus for fully digital beam formation in a phased array coherent imaging system", US Patent N° 4809184, Fob 1989] and [Corl, "Digital ultrasound system with dynamic focus", US Patent 4974211, Nov 1990], $m$ clocks derived from a master $m$ frequency - sometimes higher than the sampling frequency- sampling clock are generated, each with a $2\pi/m$ offset; a clock selector per channel actuated by the content of the focusing memory, allows associating at each moment one of the clocks to the sampling clock. The distribution of multiple clocks and their selection by temporal coherence is a problem, especially for the greater temporal resolutions.

Another possibility is to store each of the channel sampling clocks in a table as a 1s and 0s sequence, as suggested in [J.H. Kim, T. Song, S.B. Park, "Pipelined Sampled-Delay focusing in ultrasound imaging systems", *Ultrasonic Imaging* 9, pp75-(91), 1987], but it is not a practical approach due to the amount of memory necessary to store all the sampling clocks of all the channels for multiple scanning lines.

Another alternative calculates in real time the sampling instants by means of specialized circuits associated to each channel. This technique is described in [Park et al., "Real time digital reception focusing method and apparatus adopting the same", US Patent 5669384, Sep 1997], [Bae, "Focusing delay calculation method for real-time digital focusing and apparatus adopting the same", US Patent 5386881, Feb 1998] and [Petrofsky, "Method and apparatus for distributed focus control with slope tracking", US Patent 5724972, Mar 1998]. All the methods, with their variations, are based on the average point algorithm described in [Bae et al., "An efficient Real Time Focusing Delay Calculation in Ultrasonic Imaging Systems", Ultrasonic Imaging, 16, pp 231-248, 1994].

Although this is an interesting technique because it offers the possibility of integrating it in an ASIC, it has several disadvantages, such as: the need to program a large number of parameters for each of the scanning lines and each channel, the complexity of the hardware required to obtain satisfactory resolution, the lower efficiency of use of the silicon area versus that required by memory-based systems due to the low regularity of the hardware. It also requires a compromise between a high calculation speed or a reduction in the range of application.

The electronic method and system that are the object of the present invention belong to this group and solve the problems described by a mixed technique that combines a focusing memory of a decreased size that only requires a fraction of bit per each focus and channel, with a high resolution of the sampling instant calculated in real time achieved by simple and regular circuits that are easily VLSI integrated.

## DESCRIPTION OF THE INVENTION

### INTRODUCTION

A beam former that forms the coherent composition of signals coming from a specific direction of propagation, received by a set of $N$ transducers receptors or array is described. The methodology and apparatuses described are applicable to fields such as ultrasonic imaging (echography and Non-destructive Essays), radar, sonar, acoustics, seismology and other.

The beam former described herein operates with arrays which elements may be arbitrarily distributed. In particular, it achieves the dynamic focusing with deflection of the beam in azimuth and elevation using bidirnensional arrays.

The operational principle is based in sampling the signal received by each array element at the instants that correspond to those of the signal arrival from multiple foci located along a given direction of propagation. Within the limits established by the guiding principles of the present invention, the instant at which the signal that comes from each focus is received by each element in the array and acquired is determined with absolute error, in relation to the exact value, lower than half a period of a master clock. The master clock frequency can be chosen to reduce the negative incidence of the quantification lobulos of the delays in the signal/noise ration, contrast and dynamic range of the resulting signal.

The sampling frequency is independent from the signal, provided the Nyquist criterion is verified, both for radiofrequency and for base hand, as well as the master clock frequency. With oversampling lechniques ($\Delta\Sigma$ conversion), the digitalization frequency may be the lowest frequency compatible with the desired signal-to-noise ratio. Particularly, a modified master clock can be used according to the method describe to do the $\Delta\Sigma$ sampling directly.

Reducing the sampling frequency to the lowest possible compatible with the band width of the signals and/or the signal-to-noise ratio, reduces cost, energetic consumption and the volume of data to be processed. More particularly, with the method that is an essential part of the present invention, only those samples needed to do the coherent summation are acquired, without having to implement an interpolation process or having to acquire redundant information.

Also, the forming method here described, and that is also an essential part of the present invention, has low requirements for the focusing memory, that may be of a fraction of a bit per acquired sample in each channel. This high level of efficiency makes the method easily and conveniently applicable to various modes of operation, such as linear or sectorial scanning, with dense or dispersed apertures, and other applications that require multiple descriptors of the dynamic focusing for each configuration of the active aperture of the array.

Said characteristics make possible the joint integration of the focusing memory, of the data acquisition, the logic for the generation of the sampling clocks and the integration of other auxiliary functions such as apodization, dynamic aperture and control of multiple channels in one sole VLSI device or configurable FPGA type standard, with the subsequent reduction in cost without losing in quality.

## Description of the method

On behalf of simplicity, the description is done for a one-dimensional array of $N$ elements, not necessarily equidistantly spaced, considering an application of ultrasounds using the pulse-echo technique in a homogenous media with a c speed of propagation. The method described immediately below will be generically called *Progressive Focal Correction* (PFC), or the technique that describes the operational procedure.

Figure 1 shows a diagram of the general geometry including the former constraints. The array of $N$ elements numbered 1. 2. 3...., k, *...N-1* and $N$ is placed on the x axis with the coordinates origin arbitrarily defined, for convenience, in the center of the array. The purpose is to acquire a signal in the angular direction θ in relation to the z axis. To do this, multiple foci are defined at $\Delta R$ intervals in the direction of the propagation (incoming signal). The method propose combines the signals coming from each foci and received by the different elements of the array in such a manner that an output is obtained that represents the signals that would be provided by a transducer of the size of the array focused on each and every one of the foci. This process is called *coherent composition* of the received signals, and the result thus obtained is called *dynamically focused signal with deflection.*

The $\Delta R$ intervals are conveniently chosen as a function of the period of a master clock $T_x = 1/f_x$ and of the speed of propagation $c$, such as:

$$(1) \qquad\qquad \Delta R = vcT_X / 2$$

Where $v$ is a whole number that expresses the number of periods of the master clock that there are between two consecutive foci in pulse-echo. On the other hand the $\Delta R$ intervals must be sufficiently small to verify the Nyquist criterion: it $T_S$ is the temporal interval between samples and $T_R$ is the fundamental period of the signal, the Nyquist criterion is verified typically for $T_S < T_R/3$, considering the bandwidth of the habitual signals and the acquisition in radiofrequency. Preferably, the temporal interval between samples is a multiple of the period of the master clock, that is $T_S = s\,T_X$, $s$ being a whole number.

In general, an $m$ number of samples may be acquired between two consecutive foci, and choose, preferably, the value $v$ as a function of the interval between samples $T_s = s\,T_x$ for $v = ms$, when m and s are whole numbers. In a particular embodiment in which $m = 1$, each sample coincides with a focus, and therefore all the samples are dynamically focused. When $m > 1$, the dynamic focusing is strictly done on the foci, although the focus depth allows, in general, to assume that the intermediate samples are well focused. A variation of the method, called *Variable Progressive Focal Correction* or VPFC, varies dynamically the number of samples acquired between two foci, reinforcing the idea of maintaining a good dynamic focusing in all the acquired samples.

On the other hand, and as it is well known, the value $\mu = T_R/T_X$, or the relationship between the period of the received signal and the temporary resolution of the system, affects the dynamic range and the contrast of the images constructed with multiple focused beams. In general, the value of $\mu \geq 16$ (see, for instant, [D.K. Peterson, G.S. Kino, "Real-time Digital Image Reconstruction: A Description of Imaging Hardware and an Analysis of Quantization Errors". IEEE Trans. Sonics Ultrasonics, 31 pp. 337-351, Jul 1984]).

It is important that the temporal resolution as determined by $T_X$ be independent from the sampling period $T_S$, that is chosen according to the Nyquist criterion, and therefore, it is related to the period of the signals received, $T_R$. When the sampling is done in radiofrequency, generally $T_S = T_R/3$ or Ts $\approx T_R/4$ are chosen to decrease the flow of data to be processed and the energy consumption, that is, the lowest sampling frequency compatible with the Nyquist criterion. In that case, when s $\geq 6$ or s $\geq 4$ respectively the condition of $\mu = 16$ must be fulfilled. A particularity of the PFC and the VPFC techniques is that they allow most electronics to operate at the sampling frequency, reserving the higher frequency of the sampling clock for a very few elements that adjust the sampling instant.

For a focus $F$, located on the generic polar coordinate $(R, \theta)$ and for the element $k$ of the array located on the Cartesian coordinate $(x_k, 0)$, by the cosine theorem (Figure 1):

$$ (2) \qquad L_k(R,\theta) = \sqrt{R^2 + x_k^2 - 2Rx_k \, sen\theta} $$

Where $L_k(R,\theta)$ represents the length of the distance traversed by the signal from focus $F$ located on $(R,\theta)$ to the $k$ element. The flight time of an ultrasonic pulse from an emission arbitrarily chosen at the coordinate's origin to focus $F$ and from the latter to the $k$ element is:

$$ (3) \qquad T_k(R,\theta) = \frac{1}{c}\left[ R + \sqrt{R^2 + x_k^2 - 2Rx_k \, sen\theta} \right] $$

In case the origin of times is located on a different coordinate (for instance, when the space inspected is illuminated from an emitter different from that of the transducer receptor), the first term of the Equation (3) must be modified to represent the time of flight from the emitter to the focus $F$.

In general, the time the signal takes to reach the $k$ element in the array from focus $Fi$ is called $T_{ki}$. This generic notation refers to both the geometry indicated in Figure 1 as to other situations in which the elements of the array are distributed arbitrarily, the propagation medium is not homogeneous or the foci are placed in other positions. Notwithstanding, to facilitate the description, the geometry of Figure 1 will be kept, the homogenous medium with a $c$ propagation speed and the positions of the foci will be aligned forming a $\theta$ angle in relation to the array, being placed, for the moment, at regular $\Delta R$ intervals from an initial distance $R_0$ in which the firs focus $F_0$ is placed.

The variation on the arrival instant to element $k$ of signals coming from two consecutive foci $F_{I-1}$ and $F_I$, located at distances $R_{i-\Delta R}$ and $R_i$ from the coordinates origin, respectively is dictated by the following difference:

$$ (4) \qquad \Delta T_{ki}(R_i,\theta) = T_k(R_i,\theta) - T_k(R_i - \Delta R,\theta) $$

That, with a sufficiently small $\Delta R$ is:

$$ (5) \qquad \Delta T_{ki}(R_i,\theta) = \Delta R \frac{\partial T_k(R,\theta)}{\partial R}\bigg|_{R=R_i} $$

Deriving the Equation (3) from $R$ and substituting the value of $\Delta R$ obtained by Equation (1):

$$ (6) \qquad \Delta T_{ki}(R_i,\theta) = \left[ \frac{R_i - x_k \, sen\theta}{\sqrt{R_i^2 + x_k^2 - 2R_i x_k \, sen\theta}} \right] \frac{cT_X}{2} $$

This is a monotonic increasing function between $R=0$ and $R\rightarrow\infty$ and independent from the speed of propagation with the following limits:

$$(7) \qquad \lim_{R \to 0} (\Delta T_k) - \left(1 - \frac{x_k}{|x_k|} sen\theta \right) \frac{vT_X}{2} \geq 0$$

$$(8) \qquad \lim_{R \to \infty} (\Delta T_k) - vT_X$$

Where, for a clearer notation, $\Delta T_K = \Delta T_K (R,\theta)$. The value $X_K/|X_K|$ of Equation (7) represents the sign of $X_K$, while $\theta$ intervenes with its sign. In any case, the smallest possible value for $\Delta T_K$ is cero, independenly of the position of the $k$ element.

In this manner, the intervals between the sampling instants corresponding to the two consecutive foci are limited by the values expressed in Equations (7) and (8) Particularly, for $\theta = 0$ (there is no deflection), the function increases monotonically between $vT_x/2$ and $vT_x$ when the distance of the foci varies from 0 to $\infty$. When signals are received with deflection, the range of variation is greater and, in a extreme case of 90° deflection is between 0 and $vT_x$.

In a possible embodiment, the positions of the foci are defined by the values contained in the interval $[0,v]$, representing the incremental values given by Equation (6) in periods of the sampling clock. In this sense, if the whole number $v$ may be expressed in $b$ bits, each incremental delay for each foci and for each element may be represented with this same width, regardless of the position occupied by the array element, of the distance at which the focus is located and of the deflection angle. The absolute error calculated in the determination of the sampling instant is lower than half a period of the sampling clock when the result obtained by $\Delta T_k (R,\theta)/T_x$ as calculated by Equation (6) is rounded to the closest whole number. The disadvantaged presented by this option is that it requires a high number of bits to express the incremental delays per foci and per clement, with the subsequent demands on memory capacity that this entails.

Inversely, if there are $b$ bits available to represent each incremental delay, the range of possible values can be chosen from two extreme situations:

$$(9a) \qquad (v - 2^b + 1)T_X \leq \Delta T_k \leq vT_X$$

$$(9b) \qquad 0 \leq \Delta T_k \leq (2^b - 1)T_X$$

The form (9a) is useful to implement a dynamic focusing from a minimum distance of $R_{min}$, that is, for $R \geq R_{min}$, while the (9b) option would be preferable for dynamic focusing of the regions closest to the array, that is, for $R \leq R_{max}$. There are may be intermediate ranges between these two that are more suitable for a particular application, where $R_{min} \leq R \leq R_{max}$.

However, with the Progressive Focal Correction technique, the preferred option is (9a) because it does not limit the maximum valid distance. For the regions closest to the array, in which is not possible to verify the inequality to the left of the Equation (9a), the proposed technique provides a series of alternatives that will be described in detail later in the paper. Therefore, if for Equation (9a):

$$(10) \qquad a = 2^b - 1$$

It can be described in a more compact form as:

$$(11) \qquad (v - a)\, T_X \leq \Delta T_K \leq vT_X$$

Equation (6) always verifies the inequality of the right side of Equation (11), according to Equation (8). In order to also be able to verify the left side:

(12)
$$\left(1 + \frac{R - x_k sen\theta}{\sqrt{R^2 + x_k^2 - 2Rx_k sen\theta}}\right)\frac{vT_X}{2} \geq (v - a)T_X$$

With:

(13)
$$\sqrt{R^2 + x_k^2 - 2Rx_k sen\theta} = (R - x_k sen\theta)\sqrt{1 + \frac{x_k^2 \cos^2\theta}{(R - x_k sen\theta)^2}}$$

Equation (12) becomes:

(14)
$$\left(1 + \frac{1}{\sqrt{1 + \dfrac{x_k^2 \cos^2\theta}{(R - x_k sen\theta)^2}}}\right)\frac{v}{2} \geq v - a$$

Where if we change the variable:

(15)
$$z_k = x_k \cos\theta \qquad r = R - x_k sen\theta$$

The result obtained is:

(16)
$$\left(1 + \frac{1}{\sqrt{1 + z_k^2/r^2}}\right)\frac{v}{2} \geq v - a$$

And solving for $r$ we obtain:

(17)
$$r \geq \frac{z_k(v - 2a)}{2\sqrt{av - a^2}} \qquad v \geq 2a$$

That after undoing the changes of variables done for Equation (15) leads to the following result:

$$R \geq R_0(x_k, 0) = \left|\frac{v - 2a}{2\sqrt{av - a^2}}x_k \cos\theta\right| + |x_k sen\theta| \qquad v \geq 2a \qquad (18)$$

Where |*| represents the absolute value and contemplates the most unfavorable case of signs relative to $X_k$ and $\theta$. Equation (18) represents the upper limit of the minimum distance $R_0(X_k, \theta)$ from which the temporal intervals to sample the signal received by element $k$ with a $\theta$ deflection angle may be represented with a whole number of $b$ bits with an error lower than half a period $T_x$ of a master clock.

II Equation (18) is verified for all the elements of the array for all distances and angles of the region under inspection, the initial delay to acquire the first sample, corresponding to Focus $F_0$ in channel $k$ is defined by:

7

$$(19) \qquad T_0(x_k,0) = \frac{1}{c}\left\{ R_0 + \sqrt{R_0^2 + x_k^2 - 2R_0 x_k \, sen\theta} \right\}$$

Where $R_0 = R_0\,(X_k,\theta)$ as defined by Equation(18). Obviously the first acquisition may be done at a $R_1 > R_0$ distance, in which case the value of $T_0\,(X_k,\theta)$ will be calculated for this new value.

From this moment on, the sampling intervals between foci present a bounded error delimited at half a period of the master clock, that can be codified for each foci $F_i$ of $(R_0,0)$ coordinates in channel $k$ as:

$$(20) \qquad Q_{ki} = v - \left\lceil \frac{\Delta T_{ki}(R_i,\theta)}{T_X} \right\rfloor_{\uparrow\downarrow}$$

Where $|{*}|\uparrow\downarrow$ represents the rounding to the closest whole number function and $\Delta T_{Kj}\,(R_i,\theta)$ is given by the value obtained with Equation (6). Substituting in (20) Equations (10) and (11):

$$(21) \qquad 0 \le Q_{ki} \le 2^b - 1$$

That indicates the sampling intervals may be codified with b bits producing an error lower than half a period of the master clock. The value of $Q_{ki}$ is the code of *focal correction* that determines de number of periods of the master clock that the acquisition of the signals corresponding to focus $i$ in channel $k$ must be advanced.

Acquisition of a number m > 1 of samples between foci increases the efficiency of the memory since they share one sole focal correction code of $b$ bits between several samples, with a density of $b/m$ bits per sample. If, for instance, $b = 1$ and $m = 4$, 0'25 bits are required to focus each acquired sample. Distributing uniformly the advance expressed by the focal correction code $Q_{Ki}$ between the $m$ samples is a good choice to reduce the error in sampling intervals. To do this, in a preferred embodiment the following values are calculated as follows:

$$(22) \qquad u(j,q) = \left[ j\frac{v-q}{m} \right]_{\uparrow\downarrow} \qquad 1 \le j \le m$$

Where $q = Q_{ik}$ represents, generically, the focal correction code to simplify notation, and $|{*}|\uparrow\downarrow$ is the rounding function. The value of $u(j,q)$ represents the closest whole number to the number of periods of the master clock between the first focus and the $j$ sample in which $j = 1, 2,..., m$, achieving the most uniformly possible distribution of the q advance in the $m$ samples.

The temporal interval between any given focus with the sample that follows it in the order $j=m$ is $u(m,q) = v - q$, that is, the sample $j=m$ is acquired in the position of the next focus exactly, with an advance of $q$ master clock cycles in relation to the nominal interval $v$ between foci, according to that expressed by the focal correction code.

The interval between samples, in master clock periods, is given by the following formulae:

$$\Delta u(1,q) \equiv u(1,q) \qquad j = 1, \text{ as per formula}$$
$$\Delta u(j,q) = u(j,q) - u(j-1,q) \qquad 2 \le j \le m$$
$$(23)$$

In the most usual case, in which the number of samples between foci is greater or equal to the maximum advance to he applied between foci, that is $q \le 2^b\text{-}1 \le m$, when uniformly distributing the q cycles between m samples, the advance $gj$ assigned to the sample $j$ can only take the values of 0 or of 1 in relation to the nominal interval v/$m$ that is given for $q = 0$. This fact facilitates distributing the $q$ advance uniformly between a number of samples m $\ge q$ by means of a table in which the value $g(j,q)$ is codified with 1 bit after having been calculated previously with the following formula:

$$g(j,q) = v/m - \Delta u(j,q) \qquad 1 \le j \le m, \quad 0 \le q \le 2^b - 1$$

(24)

To clarify the method, let's consider an example in which $m=3$, $v=12 = 4m$, $b=2$, The possible values of $q$ are 0.1, 2, and 3 because it is codified with 2 bits, and $v/m =4$. Table I shows the results obtained when solving Equations (22) (23) and (24) for said values. It can be observed that advance $q$ is uniformly distributed amongst the samples within the resolution of 1 period of the master clock for all the focal correction codes. The density of codification in this example is of $2/3$ = 0.67 bits/sample.

**Table 1**

| Example of uniform distribution of q advances amongst m samples | | | | | | | | | | |
|---|---|---|---|---|---|---|---|---|---|---|
| | v-q | u(1,q) | u(2,q) | u(3,q) | Δu(1,q) | Δu(2,q) | Δu(3,q) | g(1,q) | g(2.q) | g(3,q) |
| q=0 | 12 | 4 | 8 | 12 | 4 | 4 | 4 | 0 | 0 | 0 |
| q=1 | 11 | 4 | 7 | 11 | 4 | 3 | 4 | 0 | 1 | 0 |
| q=2 | 10 | 3 | 7 | 10 | 3 | 4 | 3 | 1 | 0 | 1 |
| q=3 | 9 | 3 | 6 | 9 | 3 | 3 | 3 | 1 | 1 | 1 |

For each value of q there are $g(j,q)$ possible m values, each one of 1 bit, therefore, all the individual advances can be codified in a memory of $m \cdot 2^b$ words of 1 bit (in the previous example a 12x1 bit memory is sufficient).

For values $R < R_0 (X_k, \theta)$ the absolute error of the interval amongst sampling instants can be above the $T_x/2$ value. In this case, the PFC and VPFC techniques can operate in various manners, amongst which the following strategies are most notable:

1. Activate a dynamic aperture function in which the $k$ element does not intervene until signals from a distance equal or above $R_0 (X_k,0)$ are received. One of the possible embodiments produces for this element a number of null samples $M_z(k)$ equivalent to those produce at the output of the former between the beginning of acquisition $T_{ini}$ and the instant $T_0 (X_k,\theta)$ given by Equation (19):

$$M_Z(k) = \left[ \frac{T_0(x_k,\theta) - T_{ini}}{T_S} \right]_\uparrow$$

(25)

Where $|*|^\uparrow$ represents the function of rounding by excess to a whole number.

It must be noted that the relationship $D/_{max}(R_0)$, where $D$ is the size of the aperture, determines the minimum value of $F\#$ that can be applied with the proposed techniques. In a practical example it is shown that $F\#min = 1, 0'6$ and $0'4$ for values of $b = 1, 2$ and $3$ respectively, very competitive in relation to the values provided by other techniques.

2. Anticipate the acquisition of the signal in the $k$ element at a distance of $R_1 < R_0 (X_k,\theta)$ chosen in such a manner that a sample in $R_u (X_k,\theta)$ is required. The previous sampling instants will have a certain error above the delimited error, but its effect on the image may be limited. To do this, the acquisition instant of the first sample as given by Equation (19) is then modified to:

(26) $\qquad T_0^M(x_k,\theta) = T_0(x_k,\theta) - M_Z(k)T_{S1}$

Where it is expressed that, for the $k$ element $Mz(K)$ samples are acquired prior to the reception with bounded error and $T_{s1}$ is the sampling period used, which is constant in this region. The value of $T_{s1}$ can be equal to the output sampling period of the Ts beam former or, preferably, a lower value to reduce inasmuch as possible the errors in the sampling instant.

3. Operate in a mixed manner, where a first range of distances $[R_2,R_1]$ is covered with dynamic aperture, another $[R_1,R_0]$ with a limited error as in the previous point, and finally, a third $[R_0, \theta]$ in which the sampling errors are bounded within half a period of the master clock by applying the progressive focal correction technique.

In a preferred embodiment that, in addition can be generally applied when the geometry of the array is different, the medium is not homogenous, (for example, changes in the propagation speed), or the foci are distributed at regular intervals but following a trajectory different from the one considered, a calculation algorithm based on the following steps is used:

**ALGORITHM 1**

**STEP 1:** the times of propagation $Tki$ of the signal corresponding to each foci $Fi$, $I = 0, 1, 2,...$ are calculated up to each $k$ element of the array. The value of $Tki$ is obtained in each case when considering the geometry of the system and the speed(s) of propagation.

**STEP 2:** For each $k$ element the $U_{kl}$ intervals between the instants of arrival of the signals are calculated for each of the two consecutive foci expressed in periods of the master clock, such as:

$$(27) \qquad U_{ki} = \left\lfloor \frac{T_{ki} - T_{k,i-1}}{T_X} \right\rfloor_{\uparrow\downarrow} \quad i \geq 1$$

**STEP 3:** The value $v$, or nominal interval, in periods of the master clock between foci is chosen from the results of the previous equation as:

$$v \geq \max(U_{ki}) \qquad \forall k, i$$

$$(28)$$

**STEP 4:** If the number of bits available to codify the focal corrections is b, determine for each k channel the index $i=h_k$ from which:

$$(29) \qquad v - U_{ki} \leq 2^b - 1 \quad i \geq h_k$$

**STEP 5:** For foci $F_l$ with $i < h_{kl}$, the number of samples $Mz(k)$ to operate with dynamic aperture or advance acquisition in channel $k$ is:

$$(30) \qquad M_z(k) = (h_k - 1)m$$

**STEP 6:** The focal correction codes for each $k$ element corresponding to focus $i \geq h_k$ are calculated as:

$$(31) \qquad Q_{ki} = v - U_{ki} \quad i \geq h_k$$

Expressing the number of master cluck cycles with which the acquisition must be advanced for the signal corresponding to focus $i$ in channel $k$.

In another preferred embodiment, during the acquisition of the signal, the distance between two consecutive foci $F_{i-1}$ and $F_i$ is varied at moments selected by increasing the number of samples acquired between them. This variation is called *Variable Progressive Focal Correction technique* or VPFC in which the number of samples acquired between two consecutive foci goes from being a constant m to a be a function of the number of current focus, that is $M = m(i)$.

Equation 18 indicates that the value of $R_0$ grows along with the value of $v$. On the other hand, the minimum value of K is determined by Equation 1, when one sample is acquired for focus, with a temporal interval between samples of $Ts = sTx$. Initiating then the acquisition with $M= m (1) = 1$ from a distance $R_0 (1)$ as determined by the value $v = s$ to which for all the elements:

$$R_0(1) \geq \left| \frac{s - 2a}{2\sqrt{as - a^2}} x_k \cos\theta \right| + \left| x_k \, sen\theta \right| \qquad \forall k$$

(32)

Where $a = 2^b - 1$. The acquisition continues maintaining $M = m(1)=1$ until certain focus is reached at a distance $R= R_0 (2)$ based on which the following is verified for all the elements:

$$R_0(2) \geq \left| \frac{2s - 2a}{2\sqrt{2as - a^2}} x_k \cos\theta \right| + \left| x_k \, sen\theta \right| \qquad \forall k$$

(33)

starting on a section in which 2 samples may be acquired per focus, that is $M =m (2) = 2$, while maintaining the bounded sample error. After a certain time another focus, $R= R_0 (3)$ will be reached and can be operated with $M=m(3)=3$, and so on, in such a manner that, generically, from a focus located in $R= R_0 (m)$ from which m samples can be acquired verifying that:

$$R_0(m) \geq \left| \frac{ms - 2a}{2\sqrt{ams - a^2}} x_k \cos\theta \right| + \left| x_k \, sen\theta \right| \qquad \forall k$$

(34)

In summary, with the Variable Progressive Focal Correction Technique the number of samples acquired between foci is increased with time, and the focal correction codes can continue to be expressed with $b$ bits. It must be noted that the condition (34) must be verified by all the elements for each value of $m$.

In a preferred embodiment a 1 bit field called focal *offset code* $J_l$ is associated to each focus $F_l$. When $J_l=0$ the current value $m(i)=m(i-1)$ is maintained, and when $J_i=1$ it is incremented as: $m(i)=m(i-1)+1$. Algorithm 2 provides a possible method to calculate the values for $J_i$.

**ALGORITHM 2**

**STEP 1:** based on the minimum distance established by the application, $Rmin$, the larger value $m=m_0$ is determined and serves to verify Equation (34).

**STEP 2:** Initialization: $m=m_0$. Auxiliary variables: f=1 (current focus number), i=1 (current number of samples).

**STEP 3:** Repeat:

a) Calculate $R_0 (m)$ given by Equation (34) and the value of $\Delta R = cTs/2$ when $c$ = speed of propagation, $Ts$ = sampling period.

b) If $Rmin + (i + m) \Delta R \geq (m+1) R_0$
{Jf = 1; m=m+1}
In another case {Jf = 0}

c) $f=f+1$;

d) $i=i+m$;
until i≥$Ns$, where $Ns$ = number of samples to be acquired.

The number of focal offset codes is equal to that of foci for any acquisition, which can be easily done by associating to each of the focal correction codes $Qki$ the appropriate focal offset code $J_{ki} = J_i$ in each $k$ channel.

This scheme is appropriate since, in general, the signals corresponding to each focus arrive at different moments to the elements and it is easy to process. In this manner, the focal correction memory has a word band of $b+1$ bits distributed in two fields: b bits for the $Q_{kl}$ code and 1 bit for the $J_l$ code.

An alternative that provides for greater efficiency, stores in a separate memory the focal shift codes $J_l$, which content is shared by a set of channels. To solve the problem of non-simultaneity in the foci acquisition each channel has a small tail where the $J_l$ codes obtained automatically from the memory where they are stored are entered. Each channel uses the value of $J_l$ at the head of the queue each time it reaches a new focus. In this manner, one sole central memory stores one $J_i$ code per focus and some distributed small FIFOs facilitate the assignation of these common codes to each channel based on need, as it will be described in greater detail later in the system description section.

On the other hand, and since the distance between foci may be modified dynamically, for most of the practical applications one encoding of the focal correction with $b = 1$ bit is sufficient, and this provides a high efficiency in the use of the memory and a simplification of the correction circuits. In particular, it is necessary to immediately do the uniform distribution of 0 or 1 period of the master clock sample between m samples.

In view of the description given above, the Progressive Focal Correction Technique provides, with its Variable option, a method that effects the dynamic beam forming at reception with a high temporal resolution within a great range of distances. Additionally, it lacks acquisition redundancies, it does not require processes for sample interpolation, it allows for maintaining the lowest sampling rate compatible with the Nyquist criterion, and, therefore has a low energetic: consumption. Its realization is compact, due to both an adequate balance between the calculation in real time of the corrections and the content of memories pre-calculated in non real time, and to the very efficient encoding of this information.

All these characteristics lend themselves to configure a versatile beam forming system at reception with dynamic focusing, deflection, dynamic aperture and apodization which constructive details are detailed below.


**Description of the system**


The system to which the present invention refers is based on the Progressive Focal Correction technique described above, that may or may not include the Variable option, and that does the dynamic focusing deflecting the signals received through a set of transducers or array, including the apodization and dynamic aperture functions. The system will be described in sufficient detail to be understood and reproduced by personnel with knowledge of digital electronics.

In reference to Figure 2, a system of beamforming in reception is composed, in the most general case, of an array (10) composed of N elemental transducers (11) or, simply elements that receive outside signals numbered 1, 2....k..... N. Frequently, these elements are, also, emitters of signals to form a beam at emission, and passing to be receivers once this function is completed. The elements necessary to form the beam at emission have been omitted in the figure.

The signals received by the various elements are conditioned and amplified by the AAS devices (12), that deliver the analogic N signals $a_1, a_2,... a_k,...,a_N$ to the corresponding analogic-digital converters A/D (13). The AAS devices usually have, in addition to the amplifying function, other function that include compensation of attenuation with the distance by means of a gaining-time control, filtering, and on occasion the unfolding of the components in phase and cuadrature. In this last case each analogic signal $ak$ is formed by the pair $(i_k, q_k)$ that represent, respectively the components in phase and in cuadrature.

Once conditioned, the analogic signals are digitalized by the A/D converters. In the case of signals in base band with pairs $(i_k, q_k)$ two A/D converters may be used per signal or they can be multiplexed in one sole A/D converter between two signals, the even samples for the $i_k$ component and the odd samples for the $q_k$ or vice versa.

Another alternative is using $\Delta\Sigma$ converters, and represent the analogic signals $a_k$ with a continuous bit sequence. In this particular case the Progressive Focal Correction technique and its variations are especially useful for adjusting the sampling instants to the arrival signal instants to each element with the resolution of a master clock which period is adapted, cycle by cycle, to that required by such $\Delta\Sigma$ converters to obtain a given signal to noise ratio.

The techniques mentioned are known by the experts in the field and are also of general application. The differences reside mainly in the CONF device (14) or beamformer, which function is to combine the N numerical sequences e1, e2,....ek,....$e_N$ provided by the A/D converters to create one sole exit sequence r that represent, in digital form the signal received by the array and focused, ideally, in all the points of one given direction.

Each sample delivered by the A/D converters is a word of w bits, typically $6 \leq w \leq 12$ for the instant sampling converters and $1 \leq w \leq 2$ for the $\Delta\Sigma$ converters, although the system can operate with other word widths.

It is precisely the manner in which the CONF device performs the function of combining coherently the $N$ input entries $ek$ to generate the output $r$ what differentiates the present invention.

The operation of the CONF device (14), which is the subject of this patent, is based on the Progressive Focal Correction technique, which is one of its key aspects that contributes several advantages versus other methods.

Therefore, according to other methods described in the Prior Art section, each sample of the numeric sequence $e_k$ provided by the $k$-teenth A/D converter is subjected to a delay process as shown in Figure 3. Each element is associated to an individual processing channel (21). The content of a dynamic focusing memory (25) is used by a control device (24) to generate signals that produce a gross (22) and a fine (23) delay. The gross delay has, typically, the resolution of one period of the sampling clock, and the fine delay is a fraction of that. These delays are obtained with various methods that have been described in the specialized literature and are well known,

The content of the dynamic focusing memory (25) is such that, for each sample and for each channel the delays introduced align in time the outputs $f_1, f_2, ....f_N$ that correspond to the successive foci $F_1, F_2, ....F_N$. These signals are summed in (20) to obtain the dynamically focused r sequence.

The greatest advantage provided by these techniques is that only on sampling clock, common to all the channels, is needed. However, it suffers from various disadvantages derived from the need to having to carry out interpolation processes in order to obtain sufficient temporal resolution in the delays introduced in the signals, with the subsequent increase of electronic complexity and the possibility of introducing errors. Also, they require a considerable amount of memory to represent the gross and the line delays.

The system that is related in this present invention operates in a different manner, by sampling the signals directly in the instant they arrive at every one of the array elements, coming from each of the foci located along a given direction. Because the introduction of delays to the signals is avoided the interpolation processes are unnecessary, which serves to avoid possible errors and eliminate the electronic circuits necessary for that function. Also, only those samples that are necessary to obtain a coherent composition are acquired, eliminating redundancies.

The initial cost of the method subject of this patent resides in that each A/D converter must operate with a different sampling clock of a non-uniform frequency. As shown in the description below, obtaining this characteristic is a simple matter when using the methodology described as Progressive Focal Correction with the Variable option, and it can be integrated in multiple channels in one sole device of the FPGA standard type and commercially available.

Referring again to Figure 2, the proposed method requires that the beamforming device CONF (14) provides an independent and of a non-uniform frequency sample *clock* $CK_1, CK_2...DK_k, CK_N$ for each A/D converter (13) that enables the acquisition of analog signals $a_1, a_2,...a_k,....a_N$ provided by the AAS signal conditioner (12) in the instants that correspond to those of the arrival from each foci to each element (11) of the array (10). The samples obtained by the N A/D converters (13) are processed to obtain their coherent sum, that is, an output value r that is the sum of the *N* samples corresponding to the signal received from one same focus by the *N* elements of the array.

In the present invention, this methodology is applied in modular form by associating a processing channel to each of the array's elements. Figure 4 shows the structure of one of the channels (30) that processes the signal received by the *k* element (11) of the array. All the channels have a structure identical to that shown.

As in other cases, the signal is amplified and conditioned by the AAS device (12) by known methods that include electronic devices to amplify, filter and manipulate analogically the signal. The signal $a_k$, digitalized by the A/D converter (13), is obtained at the AAS exit. The samples are acquired at the instants defined by a clock generator (70) that produces a sequence of pulses $CK_k$ not uniformly spaced, which detailed description will be provided later. The clock generator is enabled by the *HFD* signal generated in the HFOC device (80) that marks the instants at with the channel begins and ends the acquisition of the dynamically focused signal.

The function of the clock generator is to guarantee that the sampling instants determined by $CKk$ correspond to those of the arrival of the signal from each of the foci to the k element, and operates according to the principles described above with the name of Progressive Focal Correction Technique and its Variable option.

With this, the sequence of $e_k$ samples obtained at the exit of the A/D converter corresponds precisely with the ordered values of the signal received by element k coming from each of the focus. These values are processed by an apodization block and dynamic aperture APD (60) that allow the enhancing of the beam characteristics and that produce the $f_k$ sequence. Because there is a 1:1 correspondence in the $e_k$ to the $f_k$ samples, this sequence is also ordered with a reference to the arrival instants of the signals to element k from each focus. The successive values of $f_k$ are transitorily stored in a tail or FIFO memory that absorbs the difference in the instants in which the samples corresponding to a same focus in different channels.

The key element is then the sampling clock generator (70) that produces the digitalization signal $CK_k$ of the k-teenth A/D converter so the samples obtained correspond to the values of the signal received by the k element from each of the foci. Figure 5 shows the beginning diagram of one of the preferred embodiments of the clock generator $CK_k$, which function is based on the method previously described, the Progressive Focal Correction technique for those cases in which the focal corrections are codified with *b=1* bit.

The circuit shown in Figure 5 only contains the basic elements that are necessary for its correct operation, the auxiliary devices having been omitted to make the description more clear. Said circuit has a REG-A registry (71a) in which a value related to the *v* parameter or nominal interval between foci is loaded in periods of the master clock. The output V has multiple lines that determine the number of stages that make up the shift register of programmable length SHR-A (72). This device has an exit *p* that is a delayed version of a quantity of *V* periods of the *c* clock of its input $CK_k$. This and other devices in the scheme shown operate synchronically with the master clock *c* of period $T_x$.

The input signal HFD enables the operation of shift register (72) and of the flip-flop (77), in such a manner that these devices keep their actual status regardless of the value of their input when *HFD = 0*. When *HFD =1* a dynamic focusing is enabled and then interrupted when HFD returns to zero. This signal is generated in the HFOC device (80), Figure 4.

The signal P is also delayed 1 period of master clock by the flip-flop FFA (73) producing the *pr* signal. The MUX (74) multiplexer provides an output s that is either the signal *p* produced by the shift register or its delayed version *pr,* based on the status of the selection line Q:

$$(35) \qquad s=p \text{ if } Q=0; \; s=pr \text{ if } Q=1$$

The status of the *Q* selector is determined by the contents of a MEM memory (75) in the F direction provided by the CNT counter (76). In the present case, k is a simple line (1 bit).

The memory is previously loaded, by circuits that are not shown, with the focal correction codes $Q_{ki}$, where k is the number of the current channel and *i* is the ordinal number of the focus, with i≥1. The circuits for the signal acquisition at the first focus (i = 0) that will he described later, determine the activation of the *HFD* signal.

The output of the multiplexer (74) is registered in the flip-flop FFB (77), which output $C_{Kk}$ is the sampling clock for the A/D converter in the current channel k (13), shown in Figure 4, that actuates the CNT counter (76) and is the input for the shift register SHR-A (72).

In order to operate, the shift register SHA-A (72) is initialized at '0', the flip-flop FFA (73) at '0', the flip-flop FFB (77) at '1'and the counter (76) is initialized with the direction of the memory where the focal correction code corresponding to focus $F_1$ (i=1) is stored. The auxiliary circuits that needed to establish these initial statuses are omitted in the figure. Therefore, the initial values of the signals are: $CK_k,=1, p=0, pr=0$ and $s=0$ (independently of the status of Q).

From this initial stale, $CK_k=0$ is loaded on the cycle of the master clock *c* that follows activation of the *HFD=1* signal, since the input of the flip-flop FFB (77) is in that status and the clock enabled for its input ce. During the first V periods of the clock c the signals *p=0* and *pr=0* arc maintained. In the following cycle, *p=1* is entered, reflecting that the initial value of $CK_k=1$ has propagated by the shift register (72), but is still maintained at pr=0. In this same cycle, if Q=0, s=pr=0, but if Q=1, s=P=1, therefore, in the following cycle, the exist $CK_k=1$ only if *Q=1; pr=1* must also be included in this cycle and therefore, if *Q=0* the $CK_k=1$ output must be entered in the next cycle. Once that $CK_k=1$ the process repeats itself.

That is why the number of n cycles that pass from the previous value $CK_k=1$ and the next value are determined by the value o Q in the following manner:

$$(36) \qquad \begin{aligned} &\text{If } Q=0: \; n=V+1 \\ &\text{If } Q=1: \; n=V+2 \end{aligned}$$

According to Equation (20), when *Q=0* the number of cycles between foci is *n=v,* and when *Q=1* it must be *n=v-1,* in view of which:

$$(37) \qquad V = v\text{-}2$$

Which indicates the initial value to be loaded in the REG-A registry (71 a) as a function of the nominal distance between foci v and expressed in periods of the master clock.

Each time that a sampling clock ($CK_k=1$) is produced, the F direction provided by the CNT (76) counter is increased and the memory MEM (75) places at the output the code corresponding to the focal correction to be applied to the next focus.

It is observed that the set FFA (73)-MUX 874)-FFB (77) configures a shift register of variable length according to the code *Q,* that may be used as the base for the actions describe below, although there are more efficient alternatives. Figure 6 shows a scheme of another preferred embodiment that does not limit the number of bits with the focal correction codes *Q* represented. In this case the previous FFA -MUX -FFB set has been substituted by a shift register SHRB (78) which programmable length is determined by the complement to the focal correction code *Q* as obtained by the inverters (75a) that produce the outputs *NQ*.

In this case the interval between the sampling instants in two consecutive foci in the current channel are determined by the multibit value of Q as delivered by the memory (75). Here the shift register SHRB (78) is initialized as '1'.

The operation is, otherwise, similar to that of the previous case except that the number of cycles is determined by the V and NQ values according to:

$$(38) \qquad n=V+NQ$$

Taking into account that $NQ=2^0 - 1 - Q,$ the initial value to load in the REG-A register (71a) as a function of the nominal interval between foci in periods of the master clock is:

$$(39) \qquad V = v \cdot 2^b + 1$$

In a practical embodiment, the inverters (75a) are unnecessary if the complementary values of NQ instead of the values of Q are stored in the memory of focal correction codes (75), maintained in the description to lend coherence to the notation. Also, in the practical embodiments of the circuits showed in Figures 5 and 6 the auxiliary logic that avoids situations in which all the outputs are at '0' -and would prevent the output of circuits- is also included.

The logic described allows the focusing of each of the acquired samples. When a periodical focal correction is preferred, sharing the same focal correction code Q each m samples, the previous circuits are modified in the manner shown in Figure 7. The value of m is loaded in an RCM register (71a) and the value stored in M is used by a control logic CTRL (90) together with the Q value of the focal correction code delivered by the memory (75) to generate the *ng* and the *cef* signals. The first controls the length of the shift register SHRB (78) making it equal to *ng+1,* while *cef* enables the CNT (76) counter, which provided the F direction to the focal correction memory (75).

The shift register SHRB (72) has a programmable length based on the V value programmed in the REG-A (71a) register, with a number of stages equal to *V+1.* The length of the shift register SHRB (/8) is also programmable with a number of stages equal to *ng+1.*

The number of master clock periods that occur between two consecutive $CK_k$ cycles is equal to the number of interposed stages between the input of SHRA (72) and the output of SHRB (78) that according to that explained above is:

$$(40) \qquad n = V + ng + 2$$

Programming in the REG.A (71 a) register a value of:

$$(41) \qquad V = v/m - 3$$

Where *v/m* represents the nominal interval between samples in master clock periods, and the resulting Equation (40) is then as follows:

$$(42) \qquad n = v/m + ng - 1$$

The logic of the CTRL (90) control shown in detail in Figure 7, controls the n interval by means of the *ng* signal, distributing uniformly the advance of the periods of the master clock Q between the m samples that are acquired between two consecutive foci.

To do that, the CM content of a module m counter CMOD (91) that is updated with each $CK_k$ clock by its enabling input ce, provides part of the DM direction of the MDM memory (92). The other part of the direction is the focal correction code Q. The direction provided to the MDM memory is:

$$(43) \qquad DM\,(j,Q) = (j-1)\,2^b + Q$$

Where *j=CM+1* indicates the order number of the current sample. Programming in non real time the contents of the *DM(j,Q)* directions of the MDM memory with the g(j,Q) value that are obtained after applying Equations (22) to (24), the *g* output represents the individual advance to be applied to each of the samples during acquisition. The inverter (93) obtains the *ng* signal, complementary of the g signal so according to Equation (42):

$$IF\ g=0 \quad \rightarrow \quad ng=1 \quad \rightarrow \quad n=v/m$$

$$(44) \qquad IF\ g=1 \quad \rightarrow \quad ng=0 \quad \rightarrow \quad n=v/m - 1$$

producing a 1 clock cycle advance when *g(j,Q)=1* and the nominal interval *v/m* is maintained when *g(j,Q)=0,* as described in the Progressive Focal Correction method.

Each time that the CMOD (91) counter overloads (that is, it switches the value $m-1$ to 0), a *cef* pulse is produced that enables the increment of the foci counter CNT (76) providing a new $F+1$ direction to the MEM memory (75). In this manner, the process is repeated with a new Q value that has been provided by the MEM memory (75) with the content of a new direction.

However, additional observations must be made. The first observation is that, evidently, the inverters (93) are eliminated if the values complementary to the $g(j,Q)$ values as obtained by the Equation (24) are propagated. Another observation is that the MDM (92) memory has a small size; for instance a 256x1 bits memory may be appropriate for values $m \leq (64)$ with $b=2$ or for $m \leq 32$ with $b=3$.

The variant called Variable Progressive Focal Correction is derived from this scheme. To obtain it, the RCM register (71 b) is substituted by a counter so that the number of m samples amongst foci can be increased in time starting from a minimum initial value $m1$ that can be, typically, equal to 1.

As described before, and according to Equation (18), the minimum distance $R_0$ from which the absolute error of the sampling instant is kept bounded within +/- $T_X/2$ and grows with the value of the interval between foci v, expressed in $T_X$ periods of the master clock. Reducing the distance between foci in the region closest to the array my programming a low value for $m_1$ decreases the value of $R_0$. The instants at which the RCM counter (71b) is incremented are determined by the instants at which the signals coming from foci located at a sufficient distance that one more sample can be acquired between the foci at all the channels. The ordinal number of the foci in which this occurs is calculated in non real time and is coded in a table that is common to all the channels, to a subset of channels or to an individual channel, establishing a balance between efficiency of the use of memory and modularity.

In a preferred embodiment, and in acquisition time, the foci in which the RCM (71b) counter has been incremented, are determined by the value of a focal offset code $J_i$ expressed with 1 bit, where $i = 1, 2,...,$ associated to each foci: the actual value of m contained in the RCM counter (71 b) is incremented if $J_l=1$, it maintains its current value if $Ji = 0$ until the next focus, where the process is repeated. The RCM increment is only enabled, then, when the sampling clock is produced to acquire the signal corresponding to a focus.

In a particular embodiment, the focal correction memory (75) provides two fields: one $J_{ki} = J_i$ of one bit indicates whether the RCM counter (71b) is to be incremented at this focus and the other, $Q_{kl}$ of b bits, indicates the advance to be distribute amongst the current m samples. The figure shows the $J = J_i$ signal with a broken line. In this case, preferably, focal correction codes $Qki$ with $b=1$ bit is used, since the distance between foci can be controlled by controlling the number of interleaved m samples, In that case, the distribution of the advances expressed by $Q_{ki}$ are of 0 o 1 master clock cycles, and are done in the sample which order is half of the content of the RCM (71 b), although other simpler alternatives that have little influence on the image's quality are also possible.

Nevertheless, and to improve the efficiency, another alternative embodiment also shown in Figure 7, the focal offset codes $J_l$ come from a separate memory MJ (59) —see Figure (10), which output is shared by multiple channels by the input $J$ to a local FIFO queue (79). During the acquisition time, a reading of a new focal shift code $Ji$ is read into the global MJ (59) memory shown in Figure (10), when some of the channels that services detects that the local FIFO (79) is empty. The supplied $Ji$ code is simultaneously written in all the local FIFOs (79) to be used by each channel when they acquire the signal of a new focus, that is, their *cef* signal is activated. It is at this time that the value at the head of the line $Jc$ is used to increment or not the m value contained in the RCM counter (71b).

It must be noted that the local FIFO queues (79) are small, typically less than 16 x 1 bits, because they only need to store a number of 1 bit codes equivalent to the maximum difference of foci acquired in different channels within a same module. This alternative consumes fewer resources than the previous one, in which the focal offset codes $Ji$ were stored in the focal correction memory (75) of each of the channels.

With the Progressive and the Variable Progressive Focal Correction Technique the use of focal correction codes is made more efficient, distributing it between a small number of samples at the beginning of the acquisition (at the limit, 1 bit per sample) and between a greater number of samples as the distance of the foci to the array increases (a decreasing fraction of 1 bit per sample).

On the other hand, it is necessary to establish with precision the instant at which the samples that would correspond to the first locus — with coordinates $(R_0, \theta)$ would be acquired, and based on which the focal correction operates according to the described methodology. This instant is determined by Equation (19) for the geometry shown in Figure 1. It must be mentioned that the initial focus may be located at a greater distance based on the needs of the application. Also, the use or not of a variable number of samples between foci will be considered to establish this initial value.

This function is done in the HFOC (80) ) of Figure 4, which will be shown in greater detail in Figure 8. One embodiment uses, simply, a counter actuated by the master clock that is initially loaded with the value $N_A(k)$.

$$N_A(k) = \left[\frac{T_0(k)}{T_X}\right]_{\uparrow\downarrow}$$

(45)

Where $T_0(k)$ represents the interval between the origin of times until the signal that corresponds to the $F_0$ focus arrives to the k element, as determined by the geometry and the speeds of propagation, or as expressed by Equation (19) for the configuration shown in Figure 1.

The signals that correspond to the first $F_0$ focus are acquired in channel k when this counter is overloaded, and enabling from this moment on the actuation of the progressive focal correction circuits. The absolute error of the acquisition instant at this first focus is lower than half a period of the master clock in all the channels, however, to maintain this temporal resolution this counter must be actuated at the master clock's frequency, which is normally high and considerably above the sampling frequency.

To avoid this inconvenience, a preferred embodiment decomposes the counter of $N_A$ cycles in two parts, as shown in Figure 8, in such a manner that (channel index k omitted) is as follows:

(46)                  $N_A = k\,N_{A1} + N_{A2} + 1$

where $K$, $N_{A1}$ and $N_{A2}$ are whole numbers. The value of $N_{A1}$ is loaded on the CNT-A (82) counter by means of the *ida* signal. When it is enabled by actuating the *cea* signal, the counter is actuated with a *cb* clock which frequency is $K$ times less than that of the master clock, *c,* and thus the mentioned difficulties are avoided.

After $N_{A1}$ *cb* cycles equivalent to K$N_{A1}$ periods $T_X$, the counter reaches the terminal value that lifts the signal *tca = 1.* In the next cycle of the *cb* clock the type RS (83) flip-flop FF is activated, and the signal *aj=1* is placed. This value is propagated throughout the shift register SHRG (84) which length establishes the value programmed for $N_{A2}$. as actuated by the master clock *c.* After $N_{A2}$ + 1 periods of the master clock have passed, the *aj = 1* value reaches the output of the shift register, and the output goes to HFD = 1, enabling the dynamic focusing circuits after $N_A$ periods of the master clock have passed, and as expressed by Equation (46). In this manner, only the shift register SHRG (84) must operate at the high frequency of the master clock.

This state remains stable until an $N_F$ number of focal corrections have been done as programmed in the CNT-F counter (86). Each focal correction is indicated by an input signal *cef,* that provides the control logic CTRL (90) shown in Figure 7 when multiple samples are taken between foci, or it is the sampling clock $CK_k$ if the signal is only acquired between foci (Figures 5 and 6). When CNT-F reaches the terminal count, the *tcf=1* signals is raised, provoking the setting to zero of the flip-flop FF 84 through its *R* input. When the function AND (81) is completed, the HFD signal returns to 0, ending the process of progressive focal correction.

However, the acquisition of signals may continue with a constant sampling period also equal to the nominal *v/m* value until the number of samples $N_s$ to be acquired has been obtained as programmed in the CNT-S (88) counter. The overflow of this value activates the FIN signal that terminates completely the acquisition of the signal in this channel.

It is important to observe that once the progressive focal correction process has been completed when HFD=0, the F direction of the focal correction codes memory (75) becomes frozen at the last value reached by the counter (76) as shown in Figures 5, 6 and 7, and thus making possible that the next acquisition set to the focal correction values stored next can be effected without the need to program a new initial value for F. In this manner it is possible to operate with various strategies, for example:

a) Generation of sectorial image where each acquisition is done with a different angle of deflection. The focal correction codes that correspond to the successive deflection angles are stored sequentially in the memory, avoiding the need to program the initial direction F of the focal correction codes memory before initiating each acquisition. Contrary to other techiques, this technique allows maintaining the bounded and the constant sampling error for all the deflection angles and at all the distances.

b) Linear scan and other manners of acquisition where an active sub-aperture composed by a subset of the elements of the array changes in each acquisition eliminating certain elements and introducing other. Similarly, the focal correction codes that correspond to the successive configurations are sequentially stored in the memory which avoids having to load the initial direction F of the focal correction codes memory before initiating each acquisition.

c) Mixed strategies in which the signal coming from multiple directions is acquired using the same focal correction codes and different values $N_\Lambda(k)$ for different directions to those used to acquire the first focus. In this case, the value of the initial direction must be re-established before the acquisition.

The APD device (60) shown in Figure 4 does the apodization and dynamic aperture functions. Apodization, which consist in multiplying the signal received in each channel by a positive real number $A_k$ from 0 to 1 improves the characteristics of the formed beam and the contrast of the image because it reduces the lateral lobules. The dynamic aperture makes possible maintaining the constant lateral resolution operating with a constant F# number that requires the size of the active aperture increases progressively in time. The dynamic aperture also facilitates the application of the Progressive Focal Correction technique in the regions closer to the transducer.

Figure 9 shows a block diagram of the APD device (60) that uses a multiplier MULT (61) for the apodization function with which it obtains the product of each of the values of the $e_k$ sequence times the $A_k$ coefficient of apodization assigned to the $k$ channel. In a preferred embodiment this coefficient is a whole number without sign of a bits. It the $e_k$ values are expressed with $w$ bits, the most significant w bits of the a+ w bits that make up the product are maintained and rounded as a function of the value of the first ignored bit and the sign of $e_k$, including the corresponding logic in the MULT (61) device itself to obtain the $h_k$ output. The function is then:

(47)

$$h_k = \left[ \frac{A_k}{2^a} e_k \right]_{\uparrow\downarrow}$$

It must be noted that the apodization function may be enabled or not with simple control circuits that are not shown in Figure 9. Basically, output $h_k$ is input $e_k$ if the apodization function is enabled, in other case it responds to Equation (47).

This function is done with a simple multiplexer governed by the apodization enabling signal.

For the dynamic aperture function there is a binary counter CNZ (62) ) that is initially loaded with value $MZ(k)$ or number of null samples as expressed by Equation (25) for channel $k$. This counter is actuated with a clock with a nominal sampling frequency, cs and is enabled by activating the $HFD=1$ signal that initiates the dynamic focusing process and is provided by the HFOC (80) device shown in Figures 4 and 8. The signal HFD=1 acts on the S signal of the FF flip-flop (64) sending the signal z=1 that selects the null input (63) to the multiplexer MUX (65).

The acquisition and processing of signals in all channels is initiated in this state. In those that the CNZ counter (63) has not reached the terminal count ($tc$ signal), the output samples in $fk$ will have a null value, and therefore the system operates as if the associated element was not active. After $MZ$ cycles of the sampling clock, during which other null samples over $fk$ have been produced, the $tc$=1 signal is raise setting to zero the FF flip-flop (64), and enabling the output of the $h_k$ values obtained by the multiplier (61). In this manner a programmable number of null samples are provided at the beginning of each acquisition in each channel, which permits programming the characteristics of the dynamic aperture. The $f_k$ sequence is then:

$$f_k = \{0,\ 0,\ ...,0,\ A_k e_k(NZ+1),\ A_k e_k(NZ+2),\ ...\}$$

(45)

Where $e_k(i)$ is the sample i of the $e_k$ sequence and therefore it corresponds with the i sample of any other secondary sequence. In this manner the order is maintained to later do the coherent composition of all the signals, null or otherwise.

Another important aspect of the present invention is its capacity for modular embodiment, a concept that is shown in Figure (10). A preferred embodiment groups in a module (50) all the processing functions of the signal for a subset of PS elements of the array, as well as other functions of global control. In particular, a module that includes the MJ memory (59) that provides the focal shift codes J together with the circuits necessary for the reading and initial loading. Also, each module (50) contains S sub-modules (40) where each sub-module process the signals from P elements and a combinator (55) that allows chainlinking multiple modules.

Internally, the S sub-modules (40) that make up one module are chained to obtain a coherent composition of the PS channels in cascade through the FIFOs (52). This structure facilitates the operation in parallel of all the channels of digital processing where the FIFOs compensate automatically the differences in the instant of acquisition of the signals in the different channels.

To do this, each of the elements (11) of the array (10) provides the signal received to one of the P elementary processors PE (30) integrated in a sub-module (40). Each elementary processor PE effects conditions and digitalizes the signal at the arrival instant of the signal to its corresponding element, following the methodology described above, and includes the devices shown in detail in Figures 4 to 8.

Each PE provides at its output an ordered sequence of values that correspond to the signals received by the element associated from each of the foci or interleaved samples. These outputs are added (41) to obtain the coherent composition of the P signals that correspond to one sub-module.

Device (42) adds up the results obtained locally at the sub-module with those already placed in its FIFO queue (52) by its predecessor. In this manner an ordered sequence that corresponds to the focused signals of its P elements plus those of the sub-modules that precede it in the chain is obtained at the output of each sub-module in the order of signal arrival from each foci. The first sub-module in the chain receives a value of '0' (51) in substitution of the FIFO (52), since there is no preceding sub-module,

Also, the combiner (55) add in (58) the results obtained by this module and that are stored in the FIFO (56) with which the preceding module has placed at the FIFO's queue (57). Since in both cases the results are ordered sequences of the values corresponding to the successive foci, the output sequence of the adder reflects this same order. The chainlinking of L modules (50), each with S sub-modules (40) with P elementary processors in each sub-module provides a system of dynamic focusing with the Focal Correction technique Distributed for *N=LSP* elements.

It is therefore a structure that presents several advantages:

■ It is modular, which facilitates the development of circuits and endows it with greater flexibility of application,
■ It process in parallel, which allows it to altain high rates of calculation,
■ It has an unlimited capacity for expansion, logically-wise.

Figure (11) shows one of the possible embodiments of the adder (41) integrated in one of the sub-modules (40). This adder receives the P sequences $e_l$ a $e_p$ corresponding to the values of the samples obtained by the P A/D converters corresponds to the first focus, the following to the second focus and son on. This reasoning is extensive when applied to samples obtained between foci, with or without the option of the Variable Progressive Focal Correction method, however, the sampling instants are not simultaneous in all the channels but it is possible that one channel acquires several successive samples while other channels wait for the appropriate signals to arrive at the associated element.

This phase offset is automatically corrected with the distributed FIFO memories (43), (45) and (47) together with the adders (44), (46) and (48). FIFO (49) performs the same function but in reference to the sample sequences of two sub-modules.

The FIFOs are associated in pairs which outputs arc added when both have, at the least, one sample stored. This situation is detected with a simple control circuit that executes a simultaneous reading in both FIFOs when they are nol empty and writes the result obtained by the corresponding adder in the FIFO connected to its output. Each reading liberates one position of memory in the FIFOs that may be occupied with the writing of a new sample. Each writing action occupies a new position in the memory of the appropriate FIFO.

Readings in the associated FIFOs are simultaneous but not so the writings that depend on the sampling instants at the respective A/D converters, that are also derived from the arrival instant of the signal from each foci to the element.

The capacity *H* of each FIFO (43) must be sufficient to store the samples acquired until there is a sample in the associated channel, at which time the adder (44) begins operating, releasing the position occupied by the corresponding sample and transferring the result of the addition operation to the FIFO (45).

Similarly, the FIFOs (45) must have a capacity of 2H, FIFOs (47) a capacity of 4H and so on. In this manner the amount of memory distributed as FIFOs that is required by a sub-module with P inputs is:

$$H \cdot P + 2 \cdot H \cdot P / 2 + 4 \cdot H * P / 4 + \ldots = H \cdot P \cdot \log_2 P$$

$$(49)$$

If only one FIFO is to be used per channel, its capacity must be of *H(P-1)* positions, in order for the total required memory to be *HP(P-1)*. For example, if *H=16* and *P=8,* according to the preferred method which structure is shown in Figure 6, 384 positions of distributed memory would be required, while in the case of using on sole FIFO per channel 896 positions would be required.

FIFO (49) stores temporarily the results obtained by the current sub-module until the adder (42) depicted in Figure (10) can vacate a position when FIFO (52) has a corresponding datum, in which case it will deliver said result to the next sub-module.

**Brief description of the contents of the Figures**

**Figure 1** shows the geometry used as an example with an array composed by N numbered elements 1, 2, 3, ...k,...N-1 and N over axis x. The foci are located at $\Delta R$ intervals from a minimum distance $R_0$. The segment between a focus located in the polar coordinates $(R,\theta)$ and the k element of the array located in the Cartesian coordinates $(x_k, 0)$ which length is $L_k(R,\theta)$ is shown.

**Figure 2** shows the general structure of a generic digital beamforming system in reception. It entails an array (10) with N elements (11) and a signal processing channel per each element. Each channel contains amplificalion circuits and signal conditioning AAS (12) and an A/D digitalizer (13). The outputs of the N digitalizers are processed by the beamformer CONF (14).

**Figure 3** shows the structure frequently used to execute the coherent composition of the signals according to known methods. It is composed by a gross delay system (22) and a fine delay system (23) which operation is managed from a local controller (24) that uses the contents ol a dynamic focusing memory (25). The N delayed outputs $f_1, f_2,....f_N$ are added in 20 to obtain the resulting r sequence.

**Figure 4** shows the structure of a digital processing channel, preferably used for the system that is the subject of this patent. It contains the amplifying and signal conditioning element AAS (12), the A/D digitalizer (13), a FIFO memory (43) that stores temporarily the acquired samples, a sampling clock generator (70) that is a fundamental element of the present invention and an enabling module of the dynamic focusing and control HFOC (80) .

**Figure 5** shows the initial structure needed to effect the sampling clock generator (70) with the focal correction coded Q expressed with 1 bit in the MEM memory (75). The CNT counter (76) establishes the address to access this memory. The sampling clock $CK_k$ of channel $k$ is generated by logic distributed in the REG-A register (71a), the programmable length shift SHR-A (72), the FFA flip-flop (73), the multiplexer MUX (74) and the FFB flip-flop (77).

**Figure 6** shows the initial structure to do the sampling clock generator (70) with focal correction codes Q expressed with multiple bits in the MEM memory (75). The counter CNT (76) establishes the address to access this memory. The sampling clock $CKk$ of channel $k$ is generated by logic distributed in the REG-A register (71a), the programmable length shift SHR-A (72), the programmable length shift SHR-B (78) and the set of inverters (75a).

**Figure 7** shows the initial structure to do the sampling clock generator (70) with focal correction codes Q expressed with one or more bits in the MEM memory (75). The counler CNT (76) establishes the address to access this memory. In this case a fixed or variable sample number can be inserted between foci, according to the contents of the register-counter RCM (71b) controlling the *ng* variable that establishes the length of the shift register (78). Variable *ng,* of 1 bit is provided by the CTRL control (90) shown in greater detail in the lower section of the figure. This unit is composed by a programmable counter module CMOD (91) which contents ant the value of the focal correction code Q form the address to one local memory MDM (92). Output g of this memory is inverted by (93) to obtain the *ng* signal. In this case the option to provide the focal offset code J from the same MEM memory of focal corrections code (75) does exist, as shown in a point line or, preferably, from the exterior and through a FIFO memory (79). As for the rest, the sampling clock $CK_k$ of channel $k$ is produced by the logic composed by the REG-A (71a) register, the length shift register SHR-A (72) and the length shift register SHR-B (78). The control unit CTRL provides, also, the *cef* output used to enable the counting of foci in the HFOC (80) unit shown in Figures 4 and 8.

**Figure 8** shows schematically the principle on which the HOFC unit (80) is based. This unit does the general control function of the acquisition. It is composed of a counter CNT-A (82) that is loaded by means of *ida* with the value $N_{A1}$, it is enabled with the cea signal and it is actuated with the low frequency clock *cb*. The terminal *tca* count acts on the S input of the FF Ilip-flop (83). Its *aj* output is delays an amount of master clock *c* cycles expressed by $N_{A2,}$ by the shift register SHRG (84). The gate AND (81) produces a high level at the HFD output when its both inputs arc on high. The flip-flop (83) is reset to 0 when its R input is raise when the signal *tcf* is activated.

The *tcf* signal is the terminal count of the CNT-F counter (86) that can be initialized with a specific number of NF foci when the *idf* signal is activated, its enabled with the *cef* signal and actuated with the low frequency *cb* clock. The CNT-S counter (88) counts the acquired samples, activating its FIN output when the $N_s$ number programmed is reached. This programming is done by activating the *ids* signal, the counter is enabled with ces and is actuated with the low frequency *cb* clock.

**Figure 9** shows schematically the principle on which the APD unit (60) that does the apodization and dynamic aperture functions is based. It is composed of a multiplier (61) that obtains the product of input *ek* times the *Ak* coefficient and delivers the result *hk* to a multiplexer MUX (65). It also has a CNZ counter actuated by a *cs* clock and enabled by the HFD signal, which initial content is *Mz*, that is, the number of null samples to be provided by this channel to implement the dynamic aperture function. When the HFD signal is raised signal z is lifted to the output of the FF flip-flop (64), and the output '0' delivered by unit (63) by the multiplexer MUX (65) that provides it as output $f_k$ is selected. When the terminal count *tc* is reached, input R of the FF flip-flop (64) is activated and its output z is lowered to a low level prompting the multiplexer MUX (65) to select the $h_k$ output of the multiplier MULT (61) and is delivered through output $f_k$.

**Figure 10** shows schematically the modular architecture of the system that is the object of this patent. A module (50) contains multiple sub-modules (40), each one with various elementary processors PE (30) which input are the signals received by the array (10) elements (11). The output of the elementary processors is added in (41) and the output of this adder device is used as one of the terms of the sum in a chain of adders (42) and FIFOs (52). The first sub-module substitutes this FIFO by a null input (51). The results provided by the adder (42) of the last sub-module are temporarily stored in a FIFO (56) to be, then added themselves in (58) to the results of a preceding module that have been stored in FIFO (57) in adder (58). Additionally the module contains a memory MJ (59) that provides the focal offset codes J to the different elementary processors PE (30).

**Figure 11** shows schematically, the principle on which the preferred embodiment of the adder (41) is based, with an example for 8 channels where multiple FIFOs (43) store temporarily the samples obtained at each elementary processor *ek.* The FIFOs (43) outputs are added by pairs in the adders (44), and the result stored in the FIFOs (47). Similarly, the outputs of said FIFOs are added in (48), and the final results are stored in FIFO (49) which output *r* represents the sum of the samples $e_1$ to $e_8$ delivered by the 8 elementary processors that are a sub-module in this example.

**Figure 12** shows a diagram of an example of a module (200) of the system that is the object of the present patent. It has two connectors (120a) and (120) b through which the analogic signals to be distributed by the buses (121a) and (121b) are entered to the double A/D converters (101). The samples provided by these converters are introduced by (106) in a FPGA (102) that does the digital processing functions corresponding to a sub-module (100), amongst which are the generation of the sampling clocks (105) and the provision of the results to the next sub-module via the bus (103). The last sub-module in the chain provides the results obtained to a FPGA (111) by the bus (104) to be combined with the preceding results of another module by bus (113), the subsequent results provided by buses (112) or (114). These buses are present in the connector (110). Also the FPGA (111) delivers control signals (115a) and (115b) to the amplifier and analogic conditioning circuits via connectors (130a) and (130b) respectively.

**Figure 13** shows the experimental measures done on the module described in Figure (12), showing the absolute error in ns for each of the 32 channels.

## EXAMPLE OF AN EMBODIMENT OF THE INVENTION

In all the cases described the sampling clock for each channel is obtained using very few hardware resources, essentially registers, counters and a memory used to store the focal correction codes, and the signal acquisition is achieved with a high temporal resolution.

Due to the high efficiency of the methodology described in what pertains to the use of hardware resources, and contrary to other embodiments, the PFC and the VPFC allow for the integration of multiple processing channels in one sole VLSI circuit, with other functions as described, even in devices of general use such as the FPGAs.

In a demonstration embodiment of this invention, a module contains 4 sub-modules, each of them with 8 elementary processors. This small system can operate with an active aperture of up to 32 elements in linear or sectorial scan with disperse aperture and arrays of 128 elements. A system that operates with dense or active apertures of up to 128 elements is configured with 4 modules. The system is scalable, adding 32 active elements for each new module installed.

Figure 12 shows graphically the module's configuration done in a printed circuit card of 220x100 mm. the circuits corresponding to the analogic pre-proccssing of the signals with a possible excitation of the transducers, as well as the post-processing circuits, that in this particular embodiment are based on an integrated computer to which the Interface and Control Unit (ICU) is connected to the system described have been omitted.

Module (200) receives the analogic signals from 32 channels provided by the amplifier and conditioning circuits via the connectors (120a) and (120b). It contains four sub-modules (100) and one combiner done in the FPGA (111). The combiner receives signals processed by the bus (113) in a preceding module in the chain and sends the results to the following one by means of bus (114). The parameters are programmed from the ICU via the control bus (112), via which also the last module in the chain delivers the final results. Also, the FPGA (111) delivers a set of digital signals via the connectors (130a) and (130b) that are used by the analogic processing unit. This structure faithfully reflects the architecture shown in Figure 10.

The analogic signals introduced by the connectors (120a) and (120b) are distributed to the sub-modules via buses (121a) and 121b respectively, where they are digitalized by the A/D converters (101). The digital outputs of the A/D converters are introduced in the FPGAs (10) via the buses (106). The sampling clock of said converters (105) is generated in the FPGAs (102) with the Progressive Focal Correction technique described in this specification.

The sub-modules are connected amongst themselves via the bidirectional buses (103). Together with bus (104), that connects the last sub-module to the combiner (111), these buses are used in one direction tor the programming of parameters from the control one (112) and in the opposite direction to provide results to the sub-modules that are next in the chain or to the combiner (111).

The combiner does the coherent summation of the results obtained at the current module via the bus (104) to those results received from a preceding module by bus (113), providing the results of this process via bus (114) to the next module, or via bus (112) to the Interface and Control Unit. Either option is programmable.

In this embodiment the following components have been used: 16-10 bits each-, type AD9218 double converters of Analog Devices have been used for the devices (101), 4 type XC2S200 FPGAs from Xilinx inc. for devices (102) and one XC25150 from Xilinx Inc., for device (111).

The system clock operates at 40 MHz, a speed at which the communication between sub-modules, modules and the ICU operate synchronically. Internally, part of the circuits also operate at this frequency or at a fraction that is determine by the sampling frequency, however, in the FPGAs (102), it is multiplied by 4 times the frequency of the system clock to obtain the 160 MHz master clock. The temporal resolution is then $Tx = 6.25\ ns$ and the sampling error is theoretically delimited to $|\varepsilon| \leq 3.125\ ns.$ This allows the processing of analogic signals of up to 10 MHz with $\mu \geq 6$ and up to 20 MHz with $\mu \geq 8$, where $\mu$ is the relationship between the signal's period and the temporary resolution that affects the dynamic range and contrast of the images.

Each FPGA (102) contains the necessary circuits to implement all the digital processing of 8 channels, including:

- Apodization, with $0 \leq A_k \leq 255/256$ coefficients or disabled $(A_k = 1,\ Vk)$
- Dynamic aperture, where $0 \leq MZ_k \leq 2^{12}$
- Beam deflection with a fixed focus, with $0 \leq NA_k \leq 2^{14}$
- Dynamic focusing according to the Progressive Focal Correction theory as described above, with 1 bit 4096 focal correction codes per each channel
- Programming the number of samples to be acquired, where $2 \leq Ns \leq 2^{17}$
- Programming the number of samples between foci, where $4 \leq m \leq 64$
- Programming of the number of foci per acquisition, where $0 \leq NF \leq 2^{12}$
- Programming of the output sampling frequency, where $2.5 \leq fs \leq 40\ MHz$
- Circuits managed for energy efficiency and enabling of functions
- Parameter programming and processing of results circuits
- Circuits to verify the module, integrating a digital signal generator

The combiner contained in the FPGA (111) has circuits to do the following tasks:

- Module management, transferring parameter values to the sub-modules via (104) and (103)
- Compilation of results obtained from the preceding module via (113)
- Composition of said results with those of the module, received via (104)
- Provision of the combined results to the following module via (114)
- Provision of the final results to the ICU via bus (112)
- Circuits to compensate signal offset
- Circuits to control the analogic pre-processing unit

Figure (13) shows experimental measures relative to the absolute error in ns (in the ordinates) of the sampling instant in each of the 32 channels (in the abscissas) for a focus located at a 50 mm distance, with a 15° deflection angle, propagation speed of $c = 5900\ ms^{-1}$, and a 5 MHz linear array with elements uniformly distributed at intervals of d = 0.8 mm.

The maximum theoretical error is of 3.125 ns, which is verified in 28 of the 32 channels. The greatest error in the 4 channels that exceeds the theoretical value is due to differences in the track layouts in the printed circuit and in the FPGAs of this experimental model, and is not a significant error at any rate. The average square error, which is more determining of the quality of the image, is of 1.9 ns.

Evidently, improvements may be introduced to the embodiment described herein, since there are devices that have a greater integration capacity. Also, other modifications that affect the type of A/D conversion, the distribution of devices, etc., can be introduced, since the model described is only submitted as a demonstrative example, without said modifications entailing a substantial change from the tenets of the methodology and system described iin the present specification.

To apply the method, a case of sectorial ultrasonic image in pulse-echo with a linear transducer of N elements centered at origin and size D aperture can be considered. The aim is to cover a $-45° \leq \theta \leq 45°$ sector with the image.

If $f_R$ is the frequency of the received signal, in order to verify with sufficient margin the Nyquist criterion, a nominal sampling frequency of $f_S = 4\ f_R$ is selected. Also, to maintain a high dynamic range and contrast in the image $\mu = fx/\ f_R = 16$ is selected, where $f_X$ is the master clock frequency.

Considering the round trip travel path of the ultrasonic pulse, the interval between samples is:

$$(50) \qquad \Delta R = c T_s / 2$$

Substituting the $\Delta R$ value given by Equation 1, when $m = 1$ the result obtained is:

$$\nu = \frac{T_s}{T_x} = 4$$

(51)

When $m$ samples are inserted between foci, the value of $v = 4\ m$. Applying now Equation 18, with $|x_k| \leq D/2$, where $D$ is the size of the aperture, the minimum distance to apply the Progressive Focal Correction technique with complete aperture is:

$$\frac{R_0}{D} \geq \frac{1}{2}\left|\frac{m\nu - 2a}{2\sqrt{am\nu - a^2}}\cos\theta\right| + \frac{1}{2}|\text{sen}\theta|$$

(52)

Where $a = 2^b - 1$, where $b$ is the number of bits with which to express the focal correction codes, provided that $m\nu \geq 2a$.

Table II shows the results of Equation (52) for $b = 1, 2$ and $3$ based on the (fixed) number of samples between foci.

It must be observed that the value $R_0/D$ represents the minimum value of the number F# that can be used to implement the operation using the dynamic aperture function. Generally, a value of F#$_{min} \leq 1$ that is obtained with most of the combinations is accepted as valid.

**Table II**

| F#$_{min}$ = R$_0$/D to apply the PFCT with complete aperture (-45°≤ θ ≤45°) | | | |
|---|---|---|---|
| M | b=1 | b=2 | b=3 |
| 1 | 0.6 | - | - |
| 2 | 0.8 | 0.4 | - |
| 4 | 1 | 0.6 | 0.4 |
| 8 | 1.4 | 0.9 | 0.6 |

## Claims

1. This patent reveals the beamforming method and system at reception with a new technique called Progressive Focal Correction technique and its Variable option. According to said method and system, the coherent composition of signals coming from sources located along a selected direction and arriving to a set of N transducers receptors or elements spatially distributed, that form an array. A beam former al reception performs the coherent composition of the received signals that are coming from discrete sources located along said direction. The coherent composition of the signals originated at each point and received by each of the N elements of the array provide one sole output signal that represents the signal that would be obtained with a sole receptor transducer, of the same size of the array, individually focused on each and every one of the foci, a technique known in the art as dynamic focusing with deflection.

   The signals received are amplified and analogically conditioned before being digitalized. The progressive focal correction technique, with or without the variable option, and the system that performs it as described in this patent are applied to the digitalized signals by means of an analogic-digital converter. The set of devices that process the signal received by an element of the array until it is combined with those corresponding to other elements is called a channel.

   Contrary to other methods that are part of the prior art, the method and system that are the object of this patent are not based on delaying the signals received by each of the array elements, nor are interpolation processes used. The system and method are based in the sampling of the received signals at the instants or arrival to each of the elements of the array from each of the foci. The method guaranties that the composition of samples is coherent, that is, only those that correspond to the same focus are combined, and also non-redundant, since only those that are going to be used in the composition process arc acquired. The system requires a non-uniform signal sampling clock that must also be different for each of the channels.

On the other hand, and contrary to other techniques in which each sampling clock is established by a '1' and '0' sequence in an individual memory for each channel, or is calculated in real time by means of specific digital circuits based on the values of a diversity of parameters that have been programmed during acquisition, the method and system that are the object of the present invention, the sampling instants are established by interpreting the content of tables associated to each one of the channels, that are calculated an stored in memories before initiation the signal acquisition process, and making the loading of multiple parameters during the acquisition time unnecessary. Also, the amount of storage required is limited because the focal correction to be applied to the sampling clock to obtain the next focus is codified. Moreover, each focal correction code can be shared by multiple consecutive samples. Finally, the architecture of the technique that is patented herein, presents a high regularity, which facilitates its integration in VLSI devices and its modular embodiment.

**Statement under Art. 19.1 PCT**

1. A method for beam forming at reception called Progressive Focal Technique intended for applications in which a diversity of N transducers grouped in an array receive vibratory energy from foci $F_i$, $i=0, 1, 2...$, located along a programmable direction, **characterized in that** it samples the signal received in each channel at the arrival instant from each focus with an absolute error lower than half a period of a master clock with a $T_x$ period, in such a manner that the consecutive samples $e_{ki}$ $i=0, 1, 2,....$obtained in each channel k correspond to the consecutive values of the signal originated at each focus $F_i$, i=0, 1, 2,..., ensuring that each sample of the resulting signal $r_i$, i=0, 1, 2,.., is obtained by the sum of the N samples $e_{ki}$ k=1, 2,..., N:

$$r_i = \sum_{k=1}^{N} e_{ki} \qquad i = 0, 1, 2, ...$$

or of a linear combination such as:

$$r_i = \sum_{k=1}^{N} A_k e_{ki} \qquad i = 0, 1, 2, ...$$

where the $Ak$ coefficients are fixed or programmable values, operation which is called summation or coherent composition of the $N$ signals.

2. A method of beam forming at reception according to Claim 1 that is further **characterized in that** the receptor channel that corresponds to the k element of the array, that includes circuits for the conditioning and amplifying of the signal, the sampling instant that corresponds to the first focus $F_0$ is determined in non real time as based on the number of cycle $N_A(k)$ of the master clock that are between the origin of times selected with the constraint that all the times be positive and the arrival instant of the $F_0$ focus to channel $k$, in such a manner that if the flight time of the signal that corresponds to the $F_i$ focus to the $k$ element is $T_i(k)$, calculated as based in the geometry of the system and the speed of propagation of the waves in the medium, the $N_A(k)$ value is given by:

$$N_A(k) = \left[ \frac{T_0(k)}{T_X} \right]_{\uparrow\downarrow}$$

Where $|*|^{\uparrow\downarrow}$ represents the function of rounding to the nearest whole number that determines $N_A(k)$ with an absolute error lower than $T_x/2$, a function that can be done by means of a $N_A(k)$ master clock cycle counter, which generates an acquisition signal pulse in channel k at the time in which said counter overloads; just as it has been describe in the present patent application, there are various manners to achieve the physical embodiment, the preferred one being an embodiment in which the counter is unfolded in two parts, one of small size that is actuated by the master clock and the main part that is actuated by a clock which frequency is a submultiple of that of the master clock.

3. A method for beam forming at reception according to the previous Claims that is also **characterized in that** for other foci $F_i$ $i > 0$, the sampling instant at channel k is determined in real time based on the $Q_{ki}$ value of $b$ bits, stored in a focal correction memory associated to said channel k that codifies the advance to be applied to the nominal value v of master clock periods that is between two consecutive foci, where the $Q_{ki}$ code is calculated in non real time based on the difference $\Delta T_{ki}$ between the arrival instant to the $k$ element of the signals coming from the focus $i$-1 and the focus $i$ as:

$$Q_{ki} = v - \left[ \frac{\Delta T_{ki}}{T_X} \right]_{\uparrow\downarrow}$$

Where $|*|\uparrow\downarrow$ represents the function of rounding to the nearest whole number and $v$ is the nominal interval between foci expressed in master clock periods, the $Q_{ki}$ codes corresponding to successive foci $F_h$ i=1, 2, 3,..., being programmed consecutively in a focal correction memory associated to the k channel which contents are read in signal acquisition time to produce the variable advance at the sampling instant for each focus $F_i$ as a function of the $Q_{ki}$ value by means of digital circuits of which several examples have been given in the present description report based on the shift registers of programmable length, other alternatives being possible, such as the use of programmable counters, without it modifying in any manner the foundational basic idea described in this Claim.

4. A method and system for beam forming at reception according to the previous Claims **characterized in that** it allows inserting a fixed or programmable number $m$ of samples between foci by means of a programmable counter module $N_M=m$ that is incremented every time that a new sample is acquired, and when it returns to zero the focal correction memory access address is incremented, making possible that a total of m samples share the same focal correction code $Q_{ki}$, which makes possible increasing the efficiency of the encoding process that may be a fraction of a bit per acquired sample while the sampling instant error is maintained basically bounded within half a period of the master clock since it has digital circuits that distribute uniformly the $Q_{ki}$ advance amongst the samples m that are acquired between foci, circuits that are based on a table in which, before acquisition and for each possible value of $Q_{ki} \leq 2^b-1$, a total of $m$ bits $g$ are programmed, and indicate for each of the m samples if the acquisition instant of said sample must be advanced *(g=1)* or not *(g=0)* by 1 master clock cycle, it being a particular case of the methodology exposed in the previous Claims.

5. A method and system for beam forming at reception according to the previous Claims **characterized in that** the distance between foci can be varied by means of the acquisition of a variable number of samples $m$ between foci that is incremented from an initial value $m_0$ when the value of a focal shift code $J_i$, of 1 bit associated to the $F$, focus is $J_i$ =1, an option called Variable Progressive Focal Correction technique, that increases the efficiency of the use of the focal correction memory by increasing the distance between foci with time, where the $J_i$ value is common to all the channels for each value of i, that can be tabulated in a completely centralized manner for all the channels, in a partially centralized manner affecting a set of channels, as it is preferably done, or individually per channel, which allows establishing a balance between flexibility of application and memory efficiency; this can be implemented by simply substituting the register of the constant value m associated to each k channel by a counter that is loaded with the initial value $m_0$ before initiating each acquisition and, during the acquisition time, said counter is incremented each time that signals are received from a new focus $F_i$ and the $J_i=1$ code is received.

6. A method and system for beam forming at reception according to the previous Claims **characterized in that** it has counters to determine the number of foci $N_F$ and of samples $N_S$ to be acquired, considering that each focus may include the obtention of m samples, m being constant or variable so when the $N_F$ counter is overloaded the progressive focal correction mechanisms and the focal shift update mechanism are blocked, freezing also, the memory address that serves to access the focal correction codes in each channel, although the signal acquisition process may continue until the counter $N_s$ that governs the number of sampler to be acquired reaches the terminal value, facilitating that one sole memory per channel can store the focal correction codes for multiple angles of deflection, multiple configurations of the active aperture or a combination of both, the initial focal correction memory address can be programmed, at any rate, before each acquisition or be automatically obtained if the acquisition sequence corresponds to the order in which the focal correction codes have been stored for the current application.

7. A method and system for beam forming at reception according to the previous Claims **characterized in that** it can operate optionally with a dynamic aperture, activating a counter associated to each channel $k$ in which a number of output samples $Nz(k)$ of null value is programmed from the beginning of the acquisition process to be combined with the corresponding samples of the remaining channels, and therefore for these $Nz(k)$ samples the result is equivalent to climinating the $k$ element in the composition of the corresponding output samples, which effectively performs the dynamic aperture system.

8. A method and system for beam forming at reception according to the previous Claims **characterized**, also, in that it can insert an apodization function or multiplication of the values of each acquired sample times by constant that can be programmed for each channel.

9. A method and system for beam forming at reception according to the previous Claims **characterized in that** it performs the coherent composition of the signal by means of a combination of distributed queues or FIFO memories and adders, preferably forming a tree structure in which each two FIFOs are associated to a 2 entry adder.

10. A method and system tor beam forming at reception according to the previous Claims **characterized in that** it facilitates its modular construction with a flexible architecture that allows for the coherent composition of an indefinite number of signals from the perspective of the logic, and for which certain number of channels are grouped to form a sub-module, several sub-modules configure a module and a system is configured by several modules, where all the channels are similar and process the acquired information in parallel.

11. A method and system for beam forming at reception according to the previous Claims **characterized in that** uses the methodology and constructive models described in this specification and shown in the attached figures below.

## INTERNATIONAL SEARCH REPORT

| International application No. |
| --- |
| PCT/ ES 2005/070008 |

| A. CLASSIFICATION OF SUBJECT MATTER |
| --- |
| IPC $^7$ G 10 K 11/34 |
| According to International Patent Classification (IPC) or to both national classification and IPC |

| B. FIELDS SEARCHED |
| --- |
| Minimum documentation searched (classification system followed by classification symbols) |
| IPC $^7$  G 10 K, G 01 S |
| Documentation searched other than minimum documentation to the extent that such documents are included in the fields searched |
| Electronic data base consulted during the international search (name of data base and, where practicable, search terms used) |
| CIBEPAT, EPODOC, WIPI, PAJ |

| C. DOCUMENTS CONSIDERED TO BE RELEVANT | | |
| --- | --- | --- |
| Category* | Citation of document, with indication, where appropriate, of the relevant passages | Relevant to claim No. |
| A | US 5669384 A (PARK, S. et al.) 23.09.1997, **the whole document.** | 1 2, 8, 10, 11 |
| A | EP 0696792 A2 (HEWLETT-PACKARD COMPANY) 14.02.1996, **the whole document.** | 1-3, 10, 11 |
| A | EP 0314487 A2 (HEWLETT-PACKARD COMPANY) 03.05.1989, **the whole document.** | 1, 2, 10, 11 |
| A | EP 0388215 A2 (HEWLETT-PACKARD COMPANY) 19.09.1990, **the whole document.** | 1, 2, 9-11 |
| A | US 5724972 A (PETROFSKY, J.) 10.03.1998, **the whole document.** | 1, 2, 10, 11 |

| ☐ Further documents are listed in the continuation of Box C. | **X** See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20.May.2005      (20.05.2005) | 25.May.2005      (25.05.2005) |
| Name and mailing address of the ISA/ **SPTO** | Authorized officer |
| Facsimile No. | Telephone No. |

Form PCT/ISA/210 (second sheet) (July 1992)

**INTERNATIONAL SEARCH REPORT**
Information on patent family members

International Application No

PCT/ ES 2005/070008

| Patent document cited in search report | Publication date | Patent familiy member(s) | Publication date |
|---|---|---|---|
| US 5669384 A | 23.09.1997 | WO 9624288 A1 | 15.08.1996 |
| | | EP 0754011 A1 | 22.01.1997 |
| | | EP 19960901560 | 06.02.1996 |
| | | JP 9506817 T | 08.07.1997 |
| | | KR 143247 B1 | 17.08.1998 |
| | | JP 2875633 B | 31.03.1999 |
| | | DE 69625412 D | 30.01.2003 |
| | | DE 69625412 T | 27.11.2003 |
| EP 0696792 A2 | 14.02.1996 | US 5469851 A | 28.11.1995 |
| | | EP 19950107246 | 12.05.1995 |
| | | JP 8056944 A | 05.03.1996 |
| EP 0314487 A2 | 03.05.1989 | EP 19880310140 | 28.10.1988 |
| | | JP 1193679 A | 03.08.1989 |
| | | JP 2654130 B | 17.09.1997 |
| | | US 4949259 A | 14.08.1990 |
| | | DE 3884905 D | 18.11.1993 |
| | | DE 3884905 T | 05.05.1994 |
| EP 0388215 A2 | 19.09.1990 | EP 19900302820 | 15.03.1990 |
| | | US 4974211 A | 27.11.1990 |
| | | DE 69022757 D | 09.11.1995 |
| | | DE 69022757 T | 07.03.1996 |
| US5724972 A | 10.03.1998 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4058003 A
- US 4550607 A, Maslak
- US 4699009 A
- US 4983970 A
- US 511695 A
- US 4796236 A
- US 5208877 A
- US 5469851 A
- US 5522391 A
- US 6042547 A
- US 6231611 B
- US 5581036 A
- US 4809184 A
- US 4974211 A
- US 5669384 A
- US 5386881 A
- US 5724972 A

### Non-patent literature cited in the description

- **R. ANDRAKA.** A survey of CORDIC algorithms for FPGAs. *Proc. 1998 ACM/SIGDA VI Int'l symposium of FPGAs,* February 1998, 191-200
- **D.K. PETERSON ; G. S. KINO.** Real-time Digital Image Reconstruction: A Description of Imaging Hardware and an Analysis of Quantization Errors. *IEEE Trans. Sonics Ultrasonics,* July 1984, vol. 31, 337-351
- **BAE et al.** An efficient Real Time Focusing Delay Calculation in Ultrasonic Imaging Systems. *Ultrasonic Imaging,* 1994, vol. 16, 231-248
- **D.K. PETERSON ; G.S. KINO.** Real-time Digital Image Reconstruction: A Description of Imaging Hardware and an Analysis of Quantization Errors. *IEEE Trans. Sonics Ultrasonics,* July 1984, vol. 31, 337-351